# EUROPÄISCHE PATENTSCHRIFT

(11) **EP 1 053 110 B1**
(45) Veröffentlichungstag und Bekanntmachung des Hinweises auf die Patenterteilung: **08.01.2003**
(21) Anmeldenummer: 98958870.2
(22) Anmeldetag: 24.10.1998
(51) Int. Cl.: B60B 7/00

(54) **LEICHTMETALL-FELGE FÜR KRAFTFAHRZEUGE**
LIGHT ALLOY RIM FOR MOTOR VEHICLES
JANTE EN ALLIAGE LEGER POUR AUTOMOBILES

(30) Priorität: 06.02.1998 DE 19804776
(43) Veröffentlichungstag der Anmeldung: 22.11.2000
(73) Patentinhaber: Volkswagen Aktiengesellschaft, 38436 Wolfsburg (DE)
(72) Erfinder: VON HARLESSEM, Jobst, D-38350 Helmstedt (DE)
(86) Internationale Anmeldenummer: EP9806770
(87) Internationale Veröffentlichungsnummer: WO99039924

(56) Entgegenhaltungen:
- WO-A-98/13219
- DE-A- 3 316 738
- DE-A- 3 822 852
- DE-A- 19 533 612
- DE-U- 9 309 706
- GB-A- 2 259 891
- US-A- 4 316 637

## Beschreibung

Die Erfindung bezieht sich auf eine Leichtmetall-Felge für Kraftfahrzeuge gemäß dem Oberbegriff des Patentanspruches 1 bzw. 2.

Leichtmetall-Felgen mit einem Felgenbett mit einem äußeren und einem inneren Felgenhorn und einer Speichen aufweisenden Radscheibe lösen in steigendem Maße Stahlfelgen ab, nicht zuletzt wegen ihres Erscheinungsbildes. Dieses wird wesentlich durch die Konstruktion der Felge bestimmt, insbesondere dadurch, ob die Felge einteilig oder mehrteilig aufgebaut ist.

Aus der DE 195 33 612 A1 ist ein Fahrzeugrad mit einer Felge bekannt, die aus einem dünnwandigeren und damit gewichtsreduzierten Felgenkörper mit einem äußeren und inneren Felgenhorn und einem Versteifungskörper im Bereich wenigstens eines Felgenhorns gebildet ist, der sich zumindest teilweise an einem äußeren Randbereich desselben abstützt. Der Versteifungskörper stellt die erforderliche Steifigkeit der Felge sicher.

In der DE 33 16 738 A1 ist eine mehrteilige (zweiteilige) Leichtmetall-Felge beschrieben, die aus einem Radteller (Radscheibe) und einem mit diesem lösbar verbundenem Felgenbett gebildet ist. Dabei weist das Felgenbett einen in radialer Richtung zur Achse des Radtellers hin ausgebildeten, umlaufenden Steg zur Überlappung und Verschraubung mit dem umfangsseitigen Randbereich des Radtellers auf, wobei neben den kraftschlüssigen Schraubverbindungsmitteln zur Verbesserung der Dauerstandsfestigkeit derselben Mittel zur formschlüssigen Verbindung vorgesehen sind. Die Schraubverbindungsmittel sind an der Außenseite der Felge sichtbar und bestimmen somit deren Erscheinungsbild mit.

Gegenstand der DE 38 22 852 A1 ist eine zweiteilige Leichtmetall-Felge, die aus einer Radscheibe mit einem zur Radinnenseite einstöckig angeformten Felgenring mit einem inneren Felgenhorn als Bestandteil des Felgenbettes und einem mit der Radscheibe radaußenseitig verbundenen Ring mit einem äußeren Felgenhorn aufweist. Der Ring ist an die Radscheibe angeschraubt. Auch bei dieser Felge sind die Verbindungsschrauben an der Außenseite sichtbar.

Die DE 93 09 706.9 U1 beschreibt eine mit drei Speichen gebildete einteilige AL-Felge, die mit einem zweiten, auf der Außenseite derselben lösbar angeordneten sogenannten Center zur Veränderung des Felgendesigns versehen ist. Dieses Center ist im Bereich zwischen dem äußeren Felgenhorn und der Radscheibe mittels an diese anschraubarer Aufnahmeelemente durch Schraubverbindungen befestigbar. Das Design dieser einteiligen Felge wird im wesentlichen durch das aufschraubbare Center und die Aufnahmeelemente bestimmt. Die tragende Radscheibe ist unsichtbar.

Die vorbeschriebenen Leichtmetall-Felgen sind nicht nur wegen ihres geringen Gewichtes gegenüber Stahlfelgen von Vorteil, sondern dienen in verstärktem Maße auch der Verbesserung des Erscheinungsbildes des Fahrzeugs. Zu diesem trägt insbesondere eine sichtbare Mehrteiligkeit der Felge und die sichtbare Verschraubung der Radscheibe mit dem Felgenbett oder mit einem Ring mit einem äußeren Felgenhorn mit den konzentrisch zur Nabe der Felge angeordneten Schrauben bei. Derartige Felgen sind jedoch aufwendig und gewichtsintensiver als einteilige Felgen und lassen den Durchmesser der Radscheibe geringer erscheinen, was einem sportlichen Aussehen in Verbindung mit niedrigeren Reifen entgegensieht. Des weiteren ist eine statische Auslegung der Mehrteiligkeit notwendig.

Aus der GB 2,259,891 A1 ist eine Leichtmetall-Felge der eingangs genannten Art bekannt, bei der zwischen den Speichen Einsätze bzw. Ornamentteile vorgesehen sind. Diese Einsätze bzw. Ornamentteile werden derart an der Radscheibe befestigt, daß sie einen nach außen gerichteten Ringflansch aufweisen, der sich an der äußeren Oberfläche der Radscheibe abstützt. An der nicht sichtbaren Seite der Radscheibe sind die Einsätze lösbar mit der Radscheibe verbunden. Der über die Radscheibe herausragende Flansch hat sich insofern als nachteilig herausgestellt, daß die Einsätze selbst bei einem leichten Anfahren an ein Hindernis am Flansch beschädigt werden können, auch weil die Radscheibe selbst weit nach außen vorgewölbt ist. Desweiteren müssen an solche Einsätze hohe Materialanforderungen bezüglich der auftretenden Zugkräfte gestellt werden. Infolge der Klemmung durch den Flansch auf der Radscheibe ist es zu dem erforderlich, daß die Radscheibe und auch die Einsätze mit hohen Toleranzgenauigkeiten gefertigt werden.

Vor diesem Hintergrund liegt der Erfindung die Aufgabe zugrunde, eine Leichtmetall-Felge zu schaffen, die bei ausreichender Stabilität und günstigen Herstellungseigenschaften optisch einen hochwertigen Eindruck vermittelt.

Diese Aufgabe wird sowohl durch eine Leichtmetall-Felge nach dem Patentanspruch 1 als auch durch eine Leichtmetall-Felge nach dem Patentanspruch 2 gelöst.

Vorteilhafte Aus- und Weiterbildungen sind in den weiteren Patentansprüchen angegeben.

Gemäß der Erfindung weist die Radscheibe einer in bekannter Weise mit einem Felgenbett, einem äußeren und einem inneren Felgenhorn und einer Speichen aufweisenden Radscheibe ausgebildeten einstückigen Felge zwischen den Speichen angeordnete sichtbare Einsätze auf, die entweder mit der äußeren Oberfläche der Radscheibe eine Ebene bilden oder unterhalb der äußeren Oberfläche der Radscheibe angeordnet sind, das heißt, nicht über die Radscheibe erhaben sind. Die Speichen bilden eine weit außen angeordnete und im wesentlichen ebene Radscheibe bilden. Diese erscheint dadurch als eine Radscheibe größeren Durchmessers.

Nach einer Ausbildung der Schraubenverbindung sind die die sichtbaren Einsätze an der Radscheibe haltenden Schrauben konzentrisch zur Felgenachse angeordnet, wobei die Anzahl der Schrauben pro Einsatz mindestens zwei betragen sollte.

Als vorteilhaft hat sich herausgestellt, die sichtbaren Einsätze zudem in die Radscheibe zu kleben. Das Klebemittel dient dann gleichzeitig als Dichtmittel gegen das Eindringen von Schmutzpartikeln bzw. Feuchtigkeit. Die Schrauben können auch nur aus rein optischen Gründen vorgesehen sein, ohne daß sie eine Befestigungswirkung aufweisen.

Der Effekt einer großen Radscheibe kann dadurch verstärkt werden, daß ihr Nabenbereich eingesenkt ist und in diesen Einsenkungsbereich weitere Einsenkungen mit Bohrungen für Befestigungsschrauben ausgebildet sind. Dabei sind vorzugsweise so viele Befestigungsschrauben wie Speichen vorgesehen, wobei die Befestigungsschrauben jeweils im Bereich zwischen der Felgenachse und einer Speiche angeordnet sind.

Die Einsätze können den der Felgenachse zugekehrten Bereich des Felgenbettes zwischen den Speichen verkleiden. Sie können jedoch auch so ausgebildet sein, daß sie diesen Bereich und die Speichenflanken abdecken.

Im letzteren Fall können sie im Bereich des Felgenbettes auch eine andere Gestaltung als an den Speichenflanken aufweisen.

Durch die Vielfalt der Variationsmöglichkeiten der Einsätze kann das Erscheinungsbild der Felge auf einfache Weise verändert und diese - auch nach den Wünschen des Nutzers - an ein Fahrzeug angepaßt werden. Dabei können die Einsätze aus Metall, beispielsweise aus Magnesium, Aluminium oder Edelstahl aber auch aus Kunststoff gefertigt sein. Des weiteren sind Einsätze aus Kohlefaser oder Carbon denkbar. Die Einsätze bieten die Möglichkeit einer Einfärbung, beispielsweise in der Wagenfarbe. Zudem können die Einsätze zur weiteren Gewichtsreduzierung mit Hohlräumen versehen sein.

Des weiteren kann vorgesehen sein, die Einsätze zu verchromen.

Nach einer Ausführungsform der erfindungsgemäßen Leichtmetall-Felge erstrecken sich die Speichen von der Nabe aus bis nahe zum äußeren Felgenhorn, wodurch die Felge optisch noch größer wirkt.

Die Erfindung wird nachstehend anhand von zwei in der Zeichnung dargestellten Ausführungsbeispielen näher erläutert. Die Zeichnung zeigt in
- Fig. 1: einen Radialschnitt durch eine erfindungsgemäße Leichtmetall-Felge,
- Fig. 2a: diese Felge in perspektivischer Ansicht,
- Fig. 2b:: einen Einsatz für den Speichenzwischenraum,
- Fig. 3a:: ein zweites Ausführungsbeispiel einer erfindungsgemäßen Leichtmetall-Felge, und in
- Fig. 3b: einen dazugehörigen Einsatz.

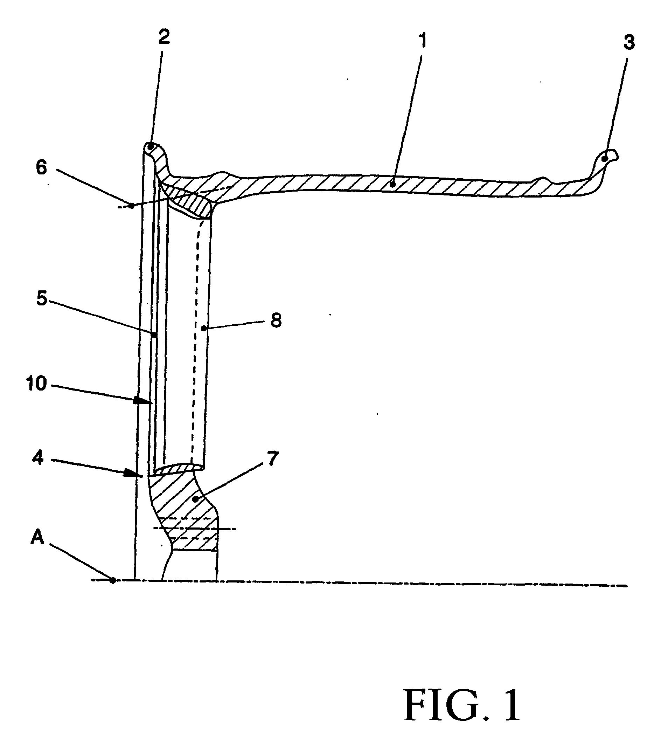

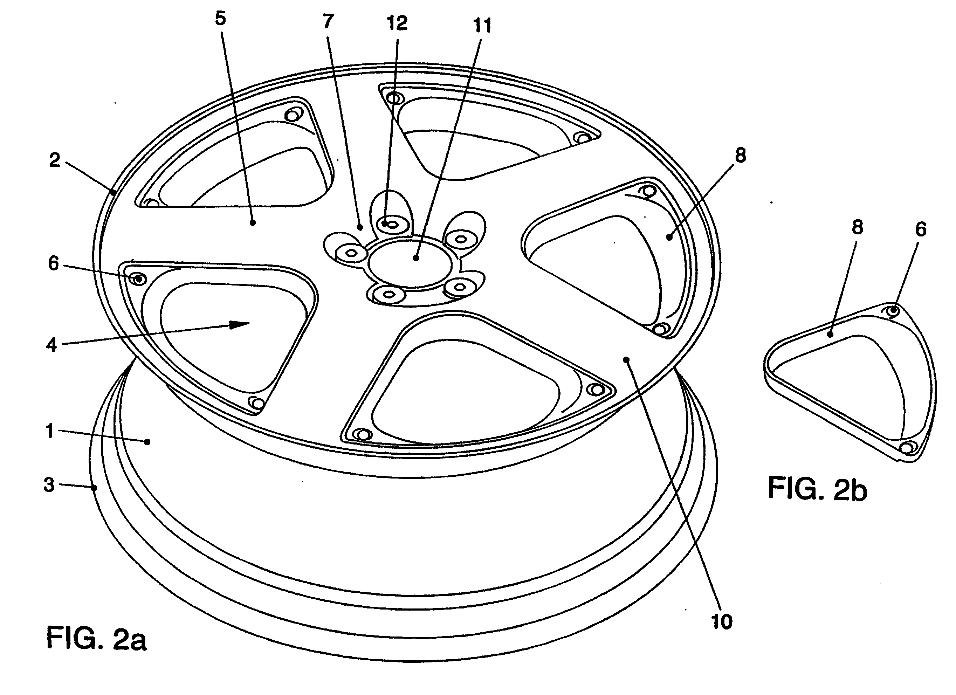

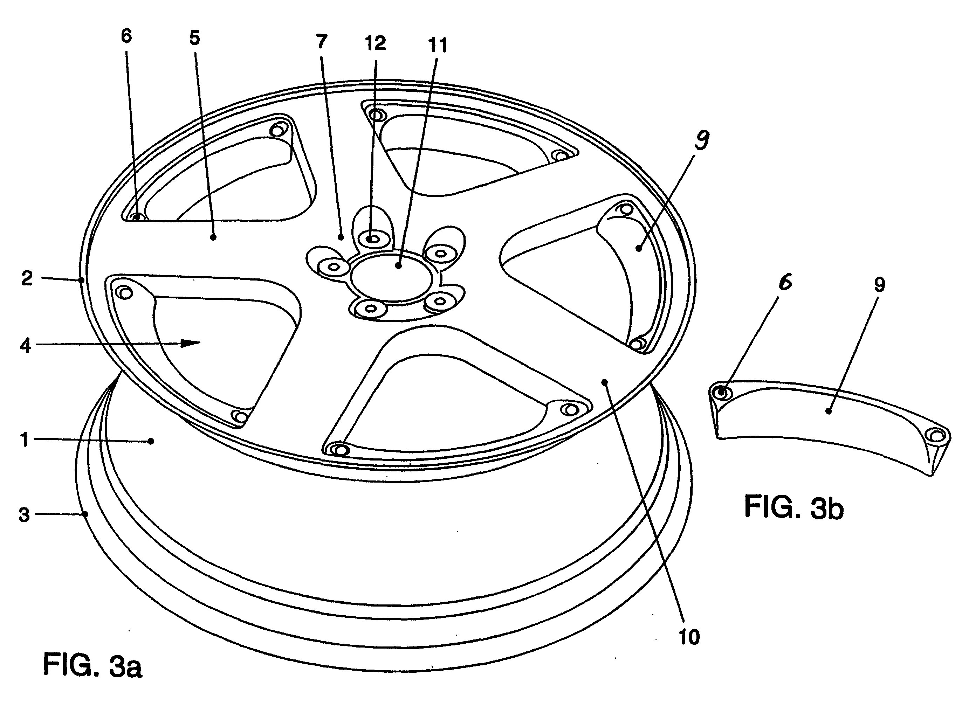

Fig. 1 zeigt eine Leichtmetall-Felge mit einem Felgenbett 1 mit einem äußeren Felgenhorn 2 und einem inneren Felgenhorn 3, mit einer Radscheibe 4, mit einer äußeren Oberfläche 10, die fünf Speichen 5 aufweist (Fig. 2a, 3a), und mit nicht näher dargestellten, jedoch bekannten Schraubelementen 6, die konzentrisch zur Felgenachse A angeordnet sind. Die Felge ist einstöckig ausgebildet. Die Speichen 5 sind senkrecht zur Felgenachse A angeordnet und erstrecken sich vom Nabenbereich 7 bis hin zum äußeren Felgenhorn 2, die Radscheibe 4 im wesentlichen eben gestaltend. Zwischen den Speichen 5 sind sichtbare Einsätze 8 aus Kunststoff angeordnet, die mit den Schraubelementen 6 am Felgenbett 1 lösbar befestigt sind und mit der äußeren Oberfläche 10 der Radscheibe 4 eine Ebene bilden. Diese Einsätze 8 verkleiden die der Felgenachse A zugekehrte Seite des Felgenbettes 1 zwischen den Speichen 5 und die Flanken der Speichen 5. Fig. 2a zeigt die Anordnung in einer perspektivischen Darstellung und Fig. 2b einen einzelnen Einsatz 8 mit Bohrungen 13 für die Schraubelemente 6.

Eine weitere Ausführungsform ist in Fig. 3a gezeigt. Bei dieser ist nur die der Felgenachse A zugekehrte Seite des Felgenbettes 1 zwischen den Speichen 5 mit jeweils einem Einsatz 9 verkleidet.

Der Nabenbereich der Leichtmetall-Felge ist eingesenkt und im Bereich zwischen der zentralen Ausnehmung 11 und den Felgen 5 mit Bohrungen für Befestigungsschrauben 12 versehen.

## Patentansprüche

1. Leichtmetall-Felge für Kraftfahrzeuge, umfassend ein Felgenbett (1) mit einem äußeren und einem inneren Felgenhom (2, 3), eine Speichen (5) aufweisende, einstückig mit dem Felgenbett (1) ausgebildete Radscheibe (4), und sichtbare Einsätze (8, 9), die jeweils zwischen den Speichen (5) an der Radscheibe (4) angeordnet und durch Schraubelemente (6) befestigt sind, **dadurch gekennzeichnet,**
**daß** die Speichen (5) der Radscheibe (4) sich bis zu dem äußeren Felgenhorn (2) erstrecken und zudem eine im wesentlichen ebene axiale Außenoberfläche an der Radscheibe (4) ausbilden,
**daß** an dem Felgenbett (1) zwischen den Speichen (5) der Felgenachse (A) zugekehrte geneigte Bereiche vorgesehen sind und diese geneigten Bereiche durch die sichtbaren Einsätze (8, 9) verkleidet sind, und
**daß** die axial äußeren Oberflächen der sichtbaren Einsätze (8, 9) mit der axialen Außenoberfläche der Radscheibe (4) jeweils in einer Ebene liegen.

2. Leichtmetall-Felge für Kraftfahrzeuge, umfassend ein Felgenbett (1) mit einem äußeren und einem inneren Felgenhom (2, 3), eine Speichen (5) aufweisende, einstückig mit dem Felgenbett (1) ausgebildete Radscheibe (4), und sichtbare Einsätze (8, 9), die zwischen den Speichen (5) an der Radscheibe (4) angeordnet sind, wobei die sichtbaren Einsätze (8, 9) jeweils separat von außen in zwischen den Speichen gebildete Öffnungen eingesetzt sind und durch Schraubelemente (6) in diesen befestigt sind, **dadurch gekennzeichnet,**
**daß** die Speichen (5) der Radscheibe (4) sich bis zu dem äußeren Felgenhorn (2) erstrecken und zudem eine im wesentlichen ebene axiale Außenoberfläche an der Radscheibe (4) ausbilden,
**daß** an dem Felgenbett (1) zwischen den Speichen (5) der Felgenachse (A) zugekehrte geneigte Bereiche vorgesehen sind und diese geneigten Bereiche durch die sichtbaren Einsätze (8, 9) verkleidet sind, und
**daß** die sichtbaren Einsätze (8, 9) unterhalb der axialen Außenoberfläche (10) der Radscheibe (4) angeordnet sind.

3. Leichtmetall-Felge nach Anspruch 1 oder 2, **dadurch gekennzeichnet, daß** die sichtbaren Einsätze (8, 9) durch sichtbar angeordnete Schraubelemente (6) befestigt sind.

4. Leichtmetall-Felge nach Anspruch 3, **dadurch gekennzeichnet, daß** die Schraubelemente (6) konzentrisch zur Felgenachse (A) angeordnet sind.

5. Leichtmetall-Felge nach einem der Ansprüche 1 bis 4, **dadurch gekennzeichnet, daß** die sichtbaren Einsätze (8, 9) an der Radscheibe (4) zudem mit einem Klebmittel befestigt sind.

6. Leichtmetall-Felge nach einem der Ansprüche 1 bis 5, **dadurch gekennzeichnet, daß** die Speichen (5) senkrecht zur Felgenachse (A) ausgebildet sind und eine im wesentlichen ebene Radscheibe (4) bilden.

7. Leichtmetall-Felge nach einem der Ansprüche 1 bis 6, **dadurch gekennzeichnet, daß** der Bereich der Nabe (7) der Radscheibe (4) eingesenkt ist und im Bereich zwischen einer Speiche (5) und der Felgenachse (A) jeweils eine Einsenkung mit einer Bohrung für eine Befestigungsschraube (12) aufweist.

8. Leichtmetall-Felge nach einem der Ansprüche 1 bis 7, **dadurch gekennzeichnet, daß** die Einsätze (8, 9) die der Felgenachse (A) zugekehrte Seite des Felgenbettes (1) zwischen den Speichen und die Flanken der Speichen (5) verkleiden.

9. Leichtmetall-Felge nach Anspruch 8, **dadurch gekennzeichnet, daß** die Einsätze (8; 9) im Bereich des Felgenbettes (1) eine andere Gestaltung als an den Flanken der Speichen (5) aufweisen.

10. Leichtmetall-Felgen nach einem der Ansprüche 1 bis 9, **dadurch gekennzeichnet, daß** die Einsätze (8; 9) aus Kunststoff gefertigt sind.

11. Leichtmetall-Felge nach einem der Ansprüche 1 bis 9, **dadurch gekennzeichnet, daß** die Einsätze (8; 9) aus Metall, insbesondere Magnesium, Aluminium oder Edelstahl gefertigt sind.

12. Leichtmetall-Felge nach einem der Ansprüche 1 bis 9, **dadurch gekennzeichnet, daß** die Einsätze (8; 9) aus Kohlefaser oder Carbon gefertigt sind.

13. Leichtmetall-Felge nach einem der Ansprüche 1 bis 12, **dadurch gekennzeichnet, daß** die Einsätze (8, 9) verchromt sind.

14. Leichtmetall-Felge nach einem der Ansprüche 1 bis 13, **dadurch gekennzeichnet, daß** die Einsätze (8; 9) wenigstens im Bereich des Felgenbettes (1) mit Hohlräumen versehen sind.

15. Leichtmetall-Felge nach einem der Ansprüche 1 bis 14, **dadurch gekennzeichnet, daß** die Einsätze (8; 9) farbig ausgebildet sind.

16. Leichtmetall-Felge nach einem der Ansprüche 1 bis 15, **dadurch gekennzeichnet, daß** die Speichen (5) sich von der Nabe (7) ausgehend erstrecken.

17. Leichtmetall-Felge nach einem der Ansprüche 1 bis 15, **dadurch gekennzeichnet, daß** die sichtbaren Einsätze (8) mit den Schraubelementen (6) lösbar am Felgenbett (1) befestigt sind.

## Claims

1. Light metal rim for motor vehicles, comprising a rim well (1) having an outer and an inner rim flange (2, 3), a wheel disc (4), which has spokes (5) and is formed integrally with the rim well (1), and visible inserts (8, 9) which are in each case arranged between the spokes (5) on the wheel disc (4) and are secured by screw elements (6), **characterized in that** the spokes (5) of the wheel disc (4) extend as far as the outer rim flange (2) and, moreover, form a substantially planar axial outer surface on the wheel disc (4), **in that** regions which are inclined towards the rim axis (A) are provided on the rim well (1), between the spokes (5), and these inclined regions are lined by the visible inserts (8, 9), and **in that** the axially outer surfaces of the visible inserts (8, 9) in each case lie in one plane with the axial outer surface of the wheel disc (4).

2. Light metal rim for motor vehicles, comprising a rim well (1) having an outer and an inner rim flange (2, 3), a wheel disc (4), which has spokes (5) and is formed integrally with the rim well (1), and visible inserts (8, 9), which are arranged between the spokes (5) on the wheel disc (4), the visible inserts (8, 9) each being inserted separately, from the outside, into openings formed between the spokes and being secured in these openings by screw elements (6), **characterized in that** the spokes (5) of the wheel disc (4) extend as far as the outer rim flange (2) and, moreover, form a substantially planar axial outer surface on the wheel disc (4), **in that** regions which are inclined towards the rim axis (A) are provided on the rim well (1), between the spokes (5), and these inclined regions are lined by the visible inserts (8, 9), and **in that** the visible inserts (8, 9) are arranged below the axial outer surface (10) of the wheel disc (4).

3. Light metal rim according to Claim 1 or 2, **characterized in that** the visible inserts (8, 9) are secured by screw elements (6) which are arranged so as to be visible.

4. Light metal rim according to Claim 3, **characterized in that** the screw elements (6) are arranged concentrically with respect to the rim axis (A).

5. Light metal rim according to one of Claims 1 to 4, **characterized in that** the visible inserts (8, 9) are also secured to the wheel disc (4) by an adhesive.

6. Light metal rim according to one of Claims 1 to 5, **characterized in that** the spokes (5) are formed perpendicular to the rim axis (A) and form a substantially planar wheel disc (4).

7. Light metal rim according to one of Claims 1 to 6, **characterized in that** the region of the hub (7) of the wheel disc (4) is recessed and, in the region between a spoke (5) and the rim axis (A), has in each case one recess with a bore for a securing screw (12).

8. Light metal rim according to one of Claims 1 to 7, **characterized in that** the inserts (8, 9) line that side of the rim well (1) which faces the rim axis (A), between the spokes and the flanks of the spokes (5).

9. Light metal rim according to Claim 8, **characterized in that** the inserts (8; 9) have a different form in the region of the rim well (1) from their form at the flanks of the spokes (5).

10. Light metal rims according to one of Claims 1 to 9, **characterized in that** the inserts (8; 9) are produced from plastic.

11. Light metal rim according to one of Claims 1 to 9, **characterized in that** the inserts (8; 9) are produced from metal, in particular magnesium, aluminium or stainless steel.

12. Light metal rim according to one of Claims 1 to 9, **characterized in that** the inserts (8; 9) are produced from carbon fibre or carbon.

13. Light metal rim according to one of Claims 1 to 12, **characterized in that** the inserts (8; 9) are chrome-plated.

14. Light metal rim according to one of Claims 1 to 13, **characterized in that** the inserts (8; 9) are provided with cavities in the region of the rim well (1).

15. Light metal rim according to one of Claims 1 to 14, **characterized in that** the inserts (8; 9) are coloured.

16. Light metal rim according to one of Claims 1 to 15, **characterized in that** the spokes (5) extend starting from the hub (7).

17. Light metal rim according to one of Claims 1 to 15, **characterized in that** the visible inserts (8) are releasibly secured to the rim well (1) by the screw elements (6).

## Revendications

1. Jante en métal léger pour véhicules à moteur, comprenant une base de jante (1) avec un rebord de jante extérieur et intérieur (2, 3), un disque de roue (4) présentant des rayons (5) et réalisé d'un seul tenant avec la base de jante (1), et des garnitures visibles (8, 9), qui sont chacune disposées entre les rayons (5) sur le disque de roue (4) et qui sont fixées par des éléments à visser (6), **caractérisée en ce que** les rayons (5) du disque de roue (4) s'étendent jusqu'au rebord extérieur (2) de la jante et forment en outre une surface extérieure axiale sensiblement plane sur le disque de roue (4), **en ce qu'**il est prévu sur la base de jante (1) des zones inclinées tournées vers l'axe de la jante (A) entre les rayons (5) et ces zones inclinées sont revêtues des garnitures visibles (8, 9), et **en ce que** les surfaces extérieures axiales des garnitures visibles (8, 9) sont chaque fois situées dans un plan avec la surface extérieure axiale du disque de roue (4).

2. Jante en métal léger pour véhicules à moteur, comprenant une base de jante (1) avec un rebord de jante extérieur et intérieur (2, 3), un disque de roue (4) présentant des rayons (5) et réalisé d'un seul tenant avec la base de jante (1), et des garnitures visibles (8, 9), qui sont disposées entre les rayons (5) sur le disque de roue (4), dans laquelle les garnitures visibles (8, 9) sont chaque fois posées séparément par l'extérieur dans des ouvertures formées entre les rayons et qui sont fixées dans celles-ci par des éléments à visser (6), **caractérisée en ce que** les rayons (5) du disque de roue (4) s'étendent jusqu'au rebord extérieur (2) de la jante et forment en outre une surface extérieure axiale sensiblement plane sur le disque de roue (4), **en ce qu'**il est prévu sur la base de jante (1) des zones inclinées tournées vers l'axe de la jante (A) entre les rayons (5) et ces zones inclinées sont revêtues des garnitures visibles (8, 9), et **en ce que** les garnitures visibles (8, 9) sont disposées en dessous de la surface extérieure axiale (10) du disque de roue (4).

3. Jante en métal léger suivant la revendication 1 ou 2, **caractérisée en ce que** les garnitures visibles (8, 9) sont fixées par des éléments à visser (6) disposés de façon visible.

4. Jante en métal léger suivant la revendication 3, **caractérisée en ce que** les éléments à visser (6) sont disposés de façon concentrique par rapport. à l'axe de la jante (A).

5. Jante en métal léger suivant l'une quelconque des revendications 1 à 4, **caractérisée en ce que** les garnitures visibles (8, 9) sont en plus fixées au disque de roue (4) avec un agent adhésif.

6. Jante en métal léger suivant l'une quelconque des revendications 1 à 5, **caractérisée en ce que** les rayons (5) sont formés perpendiculairement à l'axe de la jante (A) et forment un disque de roue (4) sensiblement plan.

7. Jante en métal léger suivant l'une quelconque des revendications 1 à 6, **caractérisée en ce que** la région du moyeu (7) du disque de roue (4) est enfoncée et présente chaque fois un enfoncement avec un alésage pour une vis de fixation (12) dans la région comprise entre un rayon (5) et l'axe de la jante (A).

8. Jante en métal léger suivant l'une quelconque des revendications 1 à 7, **caractérisée en ce que** les garnitures (8, 9) revêtent le côté de la base de jante (1) tourné vers l'axe de la jante (A) entre les rayons ainsi que les flancs des rayons (5).

9. Jante en métal léger suivant la revendication 8, **caractérisée en ce que** les garnitures (8, 9) présentent dans la région de la base de jante (1) une autre configuration que sur les flancs des rayons (5).

10. Jante en métal léger suivant l'une quelconque des revendications 1 à 9, **caractérisée en ce que** les garnitures (8, 9) sont fabriquées en matière plastique.

11. Jante en métal léger suivant l'une quelconque des revendications 1 à 9, **caractérisée en ce que** les garnitures (8, 9) sont fabriquées en métal, en particulier en magnésium, en aluminium ou en acier allié.

12. Jante en métal léger suivant l'une quelconque des revendications 1 à 9, **caractérisée en ce que** les garnitures (8, 9) sont fabriquées en fibre de carbone ou en carbone.

13. Jante en métal léger suivant l'une quelconque des revendications 1 à 12, **caractérisée en ce que** les garnitures (8, 9) sont chromées.

14. Jante en métal léger suivant l'une quelconque des revendications 1 à 13, **caractérisée en ce que** les garnitures (8, 9) sont pourvues d'espaces creux au moins dans la région de la base de jante (1).

15. Jante en métal léger suivant l'une quelconque des revendications 1 à 14, **caractérisée en ce que** les garnitures (8, 9) sont colorées.

16. Jante en métal léger suivant l'une quelconque des revendications 1 à 15, **caractérisée en ce que** les rayons (5) s'étendent à partir du moyeu (7).

17. Jante en métal léger suivant l'une quelconque des revendications 1 à 15, **caractérisée en ce que** les garnitures visibles (8) sont fixées de façon détachable sur la base de jante (1) avec les éléments à visser (6).
